(19) Europäisches Patentamt / European Patent Office / Office européen des brevets

(11) **EP 4 465 589 A1**

(12) **EUROPEAN PATENT APPLICATION**
published in accordance with Art. 153(4) EPC

(43) Date of publication:
**20.11.2024 Bulletin 2024/47**

(21) Application number: **23765661.6**

(22) Date of filing: **10.01.2023**

(51) International Patent Classification (IPC):
**H04L 9/08** (2006.01)

(86) International application number:
**PCT/CN2023/071520**

(87) International publication number:
**WO 2023/169081 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.03.2022 CN 202210227410**

(71) Applicant: **Alipay (Hangzhou) Information Technology Co., Ltd.**
**Hangzhou, Zhejiang 310000 (CN)**

(72) Inventors:
- **QIAN, Zhongtian**
  **Hangzhou, Zhejiang 310000 (CN)**
- **PAN, Wuqiong**
  **Hangzhou, Zhejiang 310000 (CN)**
- **WEI, Tao**
  **Hangzhou, Zhejiang 310000 (CN)**
- **LI, Tingting**
  **Hangzhou, Zhejiang 310000 (CN)**
- **WEI, Zhenqiang**
  **Hangzhou, Zhejiang 310000 (CN)**
- **LI, Tianyi**
  **Hangzhou, Zhejiang 310000 (CN)**

(74) Representative: **Fish & Richardson P.C.**
**Highlight Business Towers**
**Mies-van-der-Rohe-Straße 8**
**80807 München (DE)**

(54) **DATA PROCESSING**

(57) Embodiments of this specification provide data processing methods and apparatuses, applied to a system including a data provider and N secure multi-party computation MPC computation parties. N is an integer greater than 3. In the method in the embodiments, each MPC computation party obtains a data message sent by the data provider, and obtains a first data component by using the data message; performs arithmetic sharing processing by using the first data component, to obtain a second data component, so as to perform MPC processing. N data messages received by the N MPC computation parties include: a data message sent after the data provider splits private data into M data components, and M data messages each are used to carry one data component, where M is greater than 1 and is less than or equal to N, and M is a positive integer.

An MPC computation party obtains a data message sent by a data provider, and obtains a first data component based on the data message — 301

Perform arithmetic sharing processing by using the first data component, to obtain a second data component, so as to perform MPC processing, where N data messages received by N MPC computation parties include: a data message sent after the data provider splits private data into M data components, and M data messages each are used to carry one data component — 303

FIG. 3

**Description**

A. TECHNICAL FIELD

One or more embodiments of this specification relate to the field of computer technologies, and in particular, to data processing methods and apparatuses.

B. BACKGROUND

It is well known that, data usually include a large amount of privacy and confidential information, and are collectively referred to as private data. Many institutions such as enterprises and hospitals protect the private data. How to secretly share data over the Internet without disclosing privacy in cryptography is an important problem. In such a background, secure multi-party computation (MPC) emerges. MPC means that a group of participants who do not trust each other can perform collaborative computing while protecting data privacy. The participant is referred to as an MPC computation party.

The data provider randomly splits the private data into a plurality of data components, and provides the data component to each MPC computation party through a secure channel established between the data provider and the MPC computation party. A principle in which the data provider provides a data component to each MPC computation party is that each MPC computation party obtains only some data components rather than all of private data, and the private data can be restored after at least two MPC computation parties exchange the data components. Therefore, it can be ensured that each MPC computation party accesses only some data components. Even if an attacker breaks through an MPC computation party and steals or modifies some data components for a long time period, valid information cannot be obtained.

Because the data provider and the MPC computation party perform transmission through a public network, a data processing manner is urgently needed to reduce pressure placed by transmission of the data component between the data provider and the MPC computation party on transmission in the public network.

C. SUMMARY

One or more embodiments of this specification describe a data processing method, to reduce pressure placed by transmission of a data component on transmission in a public network.

According to a first aspect, a data processing method is provided, applied to a system including a data provider and N secure multi-party computation MPC computation parties, where N is an integer greater than 3, and the method includes: Each MPC computation party obtains a data message sent by the data provider, and obtains a first data component based on the data message; and each MPC computation party performs arithmetic sharing processing by using the first data component, to obtain a second data component, so as to perform MPC processing. N data messages received by the N MPC computation parties include: a data message sent after the data provider splits private data into M data components, and M data messages each are used to carry one data component, where M is greater than 1 and is less than or equal to N, and M is a positive integer.

According to some implementable manners of the embodiments of this application, if M=N, and each data message carries one data component, the obtaining a first data component based on the data message includes: a data component carried in the obtained data message is used as the first data component; or if M is greater than 1 and is less than N, the M data messages each carry one data component, and the remaining data messages carry zero data components, the obtaining a first data component based on the data message includes: using the carried data component as the first data component if the obtained data message carries one data component, where the first data component is empty if the obtained data message carries zero data components.

According to some implementable manners of the embodiments of this application, the performing arithmetic sharing processing by using the first data component carried in the data message includes: if M=N, each MPC computation party performs arithmetic sharing processing by using the first data component as to-be-shared data, to obtain the second data component; or if 1 < M < N, each MPC computation party performs zero-sharing processing, to obtain a third data component; combining the obtained third data component and the first data component carried in the data message, to obtain a fourth data component; and performing arithmetic sharing processing by using the fourth data component as to-be-shared data, to obtain the second data component.

According to some implementable manners of the embodiments of this application, the zero-sharing processing includes: Each MPC computation party generates a first derived value by using a locally held first zero-sharing key, and generates a second derived value by using a locally held second zero-sharing key; and obtains the third data component based on a difference between the first derived value and the second derived value.

According to some implementable manners of the embodiments of this application, the arithmetic sharing processing includes: sharing local to-be-shared data with a next MPC computation party after encrypting the local to-be-shared data, and receiving and decrypting data shared by a previous MPC computation party; combining the received decrypted data and the local to-be-shared data, to obtain the second data component; and performing, by each MPC computation party, arithmetic sharing processing in a cyclic order.

According to some implementable manners of the embodiments of this application, the second data component is a logical component; and the method further includes: The MPC computation party converts the second data component from a logical component to an arithmetic component, to obtain a fifth data component, so as to perform MPC processing.

According to some implementable manners of the embodiments of this application, the N MPC computation parties include a first MPC computation party, a second MPC computation party, and a third MPC computation party; and that the MPC computation party converts the second data component from a logical component to an arithmetic component includes: Each MPC computation party performs zero-sharing processing, to obtain a sixth data component, where the sixth data component is an arithmetic component; the first MPC computation party performs a first conversion and a second conversion on an arithmetic value by using a locally held logical component, to obtain two options, where the two options are arithmetic components; the first MPC computation party performs an oblivious transfer to the third MPC computation party by using the two options; and each MPC computation party performs arithmetic sharing processing by using a locally obtained arithmetic component as to-be-shared data, to obtain the fifth data component.

According to some implementable manners of the embodiments of this application, the locally held logical component includes a first logical component and a second logical component; that the first MPC computation party performs a first conversion and a second conversion on an arithmetic value by using a locally held logical component includes: The first MPC computation party generates a random value by using an interaction key; and performs the first conversion and the second conversion by using the first logical component and the second logical component that are locally held, the random value, and a quantity of decimal places of a fixed-point number used for the MPC processing, to obtain the two options; and the method further includes: The second MPC computation party generates the random value by using the interaction key.

According to some implementable manners of the embodiments of this application, the second data component is an address-geocoded component; and the method further includes: The MPC computation party converts the second data component from the address-geocoded component to a one-hot encoded component, to obtain a seventh data component, so as to perform the MPC processing.

According to some implementable manners of the embodiments of this application, that the MPC computation party converts the second data component from the address-geocoded component to a one-hot encoded component includes: determining a value of the $i^{th}$ bit of the one-hot encoded component in the following manner: for the $j^{th}$ bit of address geocoding, where j starts from 0, if the $j^{th}$ bit of a binary value of i is 1, determining that a current one-hot encoded component value of the $i^{th}$ bit is addr[0]; otherwise, determining that a current one-hot encoded component value of the $i^{th}$ bit is a complement value of addr[0]; increasing a value of j by 1, and if the $j^{th}$ bit of the binary value of i is 1, multiplying the current one-hot encoded component value of the $i^{th}$ bit by addr[j], and updating the current one-hot encoded component value of the $i^{th}$ bit by using a value obtained through multiplication; otherwise, multiplying the current one-hot encoded component value of the $i^{th}$ bit by a complement value of addr[j], and updating the current one-hot encoded component value of the $i^{th}$ bit by using a value obtained through multiplication; and performing the step of increasing a value of j by 1, until j is a highest-order bit of the address-geocoded component, to obtain a one-hot encoded component value of the $i^{th}$ bit, where addr[0] is a value of the $0^{th}$ bit of the address-geocoded component, and addr[j] is a value of the $j^{th}$ bit of the address-geocoded component.

According to a second aspect, a data processing method is provided, applied to a system including a data provider and N secure multi-party computation MPC computation parties, where N is an integer greater than 3, and the method includes: The data provider splits private data into M data components, where M is greater than 1 and less than or equal to N, and M is a positive integer; and individually sends the M data components to the N MPC computation parties by using a data message, so that each MPC computation party receives one or zero data components, uses the one or zero data components as a first data component, and performs arithmetic sharing processing by using the first data component, to obtain a second data component, so as to perform MPC processing.

According to some implementable manners of the embodiments of this application, the data component is a logical component or an address-geocoded component.

According to a third aspect, a data processing apparatus is provided, applied to a system including a data provider and N secure multi-party computation MPC computation parties, where N is an integer greater than 3, and the apparatus is disposed on the MPC computation party, and includes: a data obtaining unit, configured to: obtain a data message sent by the data provider, and obtain a first data component by using the data message; and an arithmetic sharing unit, configured to perform arithmetic sharing processing by using the first data component, to obtain a second data component, so as to perform MPC processing, where N data messages received by the N MPC computation parties include: a data message sent after the data provider splits private data into M data components, and M data messages each are used to carry one data component, where $1 < M \leq N$, and M is a positive integer.

According to a fourth aspect, a data processing apparatus is provided, applied to a system including a data provider and N secure multi-party computation MPC computation parties, where N is an integer greater than 3, and the apparatus is disposed on the data provider, and includes: a data splitting unit, configured to split private data into M data components, where $1 < M \le N$, and M is a positive integer; and a data sending unit, configured to individually send the M data components to the N MPC computation parties by using a data message, so that each MPC computation party receives one or zero data components, uses the one or zero data components as a first data component, and performs arithmetic sharing processing by using the first data component, to obtain a second data component, so as to perform MPC processing.

According to a fifth aspect, a computing device is provided, including a memory and a processor. The memory stores executable code, and when executing the executable code, the processor implements the method in the first aspect.

According to the methods and apparatuses provided in the embodiments of this specification, a quantity of data components transmitted between the data provider and the MPC computation party through a public network is reduced to M. Compared with a case in which there are originally (N-1)*N data components, in this case, pressure on transmission in the public network is clearly reduced. Effect is particularly obvious when there is a large quantity of data providers. In addition, the MPC computation party performs arithmetic sharing processing, so that each MPC computation party obtains only some data components, and private data can be restored only by using at least two MPC computation parties.

D. BRIEF DESCRIPTION OF DRAWINGS

To describe the technical solutions in embodiments of this application or in the existing technology more clearly, the following briefly describes the accompanying drawings needed for describing the embodiments or the existing technology. Clearly, the accompanying drawings in the following description show some embodiments of this application, and a person of ordinary skill in the art can still derive other drawings from these accompanying drawings without creative efforts.

FIG. 1 is an architectural diagram illustrating a system to which some embodiments of this application are applicable;
FIG. 2 is a flowchart illustrating a data processing method, according to some embodiments;
FIG. 3 is a flowchart illustrating a data processing method, according to some other embodiments;
FIG. 4 is an example diagram illustrating data transmission, according to some embodiments of this application;
FIG. 5 is an example diagram illustrating other data transmission, according to some embodiments of this application;
FIG. 6 is a flowchart illustrating a method for converting a logical component into an arithmetic component, according to some embodiments of this application;
FIG. 7 is a flowchart illustrating a method for converting an address-geocoded component into one-hot encoded component, according to some embodiments of this application;
FIG. 8 is a schematic block diagram illustrating a data processing apparatus, according to some embodiments; and
FIG. 9 is a schematic block diagram illustrating a data processing apparatus, according to some other embodiments.

E. DESCRIPTION OF EMBODIMENTS

The terms used in the embodiments of this application are merely used to describe specific embodiments, and are not intended to limit this application. The terms "a", "said", and "the" of singular forms used in the embodiments of this application and the appended claims are also intended to include plural forms, unless otherwise specified in the context clearly.

It should be understood that the term "and/or" used in this specification merely describes an association relationship between associated objects and indicates that three relationships can exist. For example, A and/or B can indicate the following three cases: Only A exists, both A and B exist, and only B exists. In addition, the character "/" in this specification usually indicates an "or" relationship between the associated objects.

Depending on the context, for example, the word "if" used here can be interpreted as "while", "when", "in response to determining", or "in response to detecting". Similarly, depending on the context, the phrase "if determining ..." or "if detecting (the condition or event stated)" can be explained as "when determining ...", "in response to determining ...", "when detecting (the condition or event stated)", or "in response to detecting (the condition or event stated)".

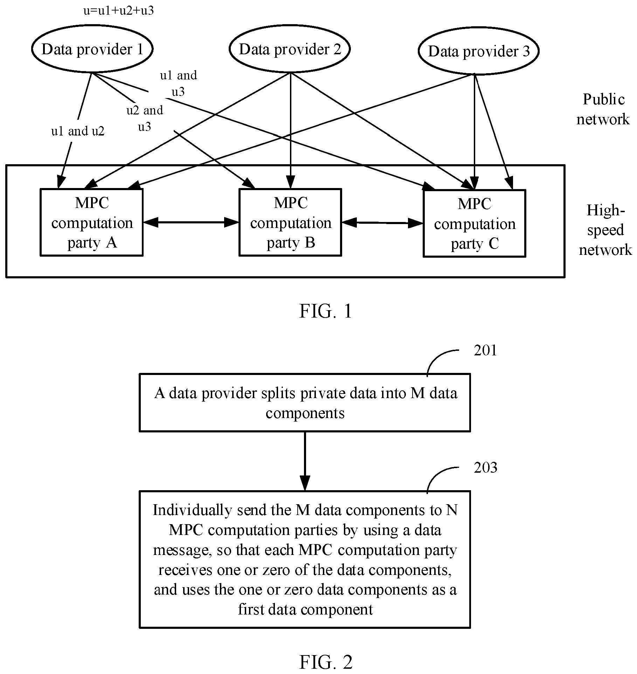

FIG. 1 is an architectural diagram illustrating a system to which some embodiments of this application are applicable. As shown in FIG. 1, the system includes a data provider and N MPC computation parties. N is an integer greater than 3, and that N is 3 is used as an example in FIG. 1. Trusted-environment-based cryptographic computing (TECC) is based on a secure multi-party computation (MPC) algorithm, and is a secure and efficient cryptographic computing method. In a TECC application scenario, the MPC computation party can be each trusted execution environment (TEE).

In an existing data component transmission manner, the data provider splits private data into N data components, and then sends N-1 data components to each MPC computation party. In addition, it is ensured that each MPC computation party obtains a different one of the N-1 data components. The data provider and the MPC computation party perform transmission in a public network. In such a transmission manner, each data provider needs to transmit (N-1) *N data components. A network transmission pressure is high. When there are many data providers, pressure is especially obvious.

FIG. 1 is used as an example. A data provider 1 splits data u into u1, u2, and u3; and then, provides u1 and u2 to an MPC computation party A, provides u2 and u3 to an MPC computation party B, and provides u3 and u1 to an MPC computation party C. In this case, the data provider 1 needs to transmit six data components through the public network. This application can reduce a quantity of data components transmitted by the data provider while satisfying the needs of an MPC algorithm.

Solutions provided in this specification are described below with reference to the accompanying drawings.

FIG. 2 is a flowchart illustrating a data processing method, according to some embodiments. The method is performed by a data provider in the system shown in FIG. 1. As shown in FIG. 2, the method includes the following steps: Step 201: The data provider splits private data into M data components. Here, $1 < M \leq N$, and M is a positive integer.

Step 203: Individually send the M data components to N MPC computation parties by using a data message, so that each MPC computation party receives one or zero data components, and uses the one or zero data components as a first data component.

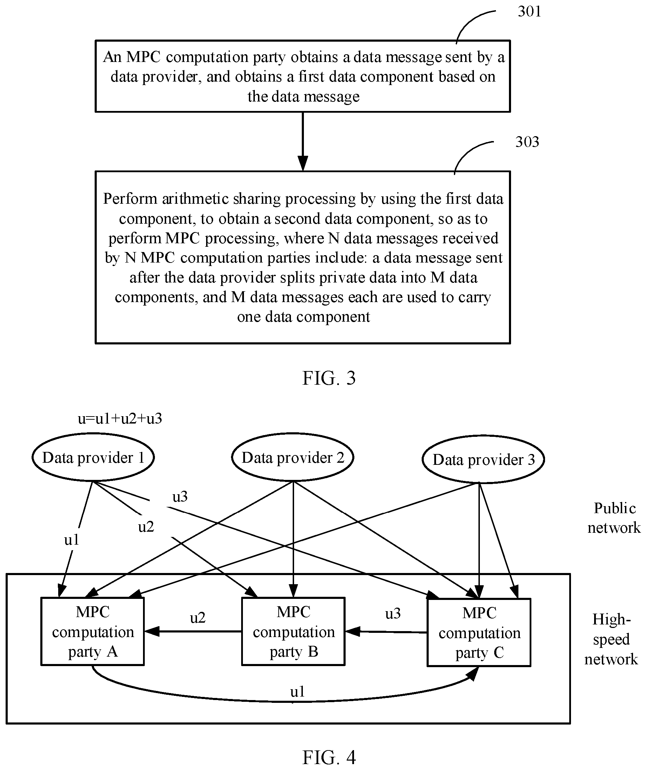

FIG. 3 is a flowchart illustrating a data processing method, according to some other embodiments. The method is performed by each MPC computation party in the system shown in FIG. 1. As shown in FIG. 3, the method includes the following steps: Step 301: The MPC computation party obtains a data message sent by a data provider, and obtains a first data component based on the data message.

Step 303: Perform arithmetic sharing processing by using the first data component, to obtain a second data component, so as to perform MPC processing, where N data messages received by the N MPC computation parties include: a data message sent after the data provider splits private data into M data components, and M data messages each are used to carry one data component, where $1 < M \leq N$, and M is a positive integer.

According to the data processing methods shown in FIG. 2 and FIG. 3, a quantity of data components transmitted between the data provider and the MPC computation party through a public network is reduced to M. Compared with a case in which there are originally (N-1)*N data components, in this case, pressure on transmission in the public network is clearly reduced. Effect is particularly obvious when there is a large quantity of data providers. In addition, the MPC computation party performs arithmetic sharing processing, so that each MPC computation party obtains only some data components, and private data can be restored only by using at least two MPC computation parties.

In some implementable manners, M=N, the data provider respectively sends N data components to the N MPC computation parties. In other words, each MPC computation party receives one data component, namely, the first data component, and each MPC computation party receives a different data component.

In this case, after receiving the first data component, the MPC computation party only needs to perform arithmetic sharing processing by using the received first data component.

The arithmetic sharing processing is: sharing local to-be-shared data with a next MPC computation party after encrypting the local to-be-shared data, and receiving and decrypting data shared by a previous MPC computation party; combining the received decrypted data and the local to-be-shared data, to obtain the second data component. In other words, the arithmetic sharing processing is a process in which each MPC computation party performs data sharing in a cyclic order. In addition, a key used when the MPC computation party performs encryption is the same as a key used when the next MPC computation party performs decryption. The key is preconfigured or pre-agreed upon.

This implementation is described by using the three MPC computation parties shown in FIG. 1 as an example. As shown in FIG. 4, the data provider still splits the private data into three data components u1, u2, and u3; and then, transmits u1 to an MPC computation party A, transmits u2 to an MPC computation party B, and transmits u3 to an MPC computation party C.

The MPC computation party A, the MPC computation party B, and the MPC computation party C jointly perform one time of arithmetic sharing processing. All MPC computation parties pre-agree upon an interaction key, so that each MPC computation party locally has an interaction key pair (share_rng_d, share_rng_u). share_rng_d of the MPC computation party A is the same as share_rng_u of the MPC computation party C, share_rng_d of the MPC computation party B is the same as share_rng_u of the MPC computation party A, and share_rng_d of the MPC computation party C is the same as share_rng_u of the MPC computation party B.

During arithmetic sharing processing, the MPC computation party A encrypts u1 by using share_rng_d, and then transmits the encrypted u1 to the MPC computation party C. The MPC computation party C decrypts the encrypted u1 by using share_rng_u, to obtain ul.

The MPC computation party B encrypts u2 by using share_rng_d, and then transmits the encrypted u2 to the MPC computation party A. The MPC computation party A decrypts the encrypted u2 by using share_rng_u, to obtain u2.

The MPC computation party C encrypts u3 by using share_rng_d, and then transmits the encrypted u3 to the MPC computation party B. The MPC computation party B decrypts the encrypted u3 by using share_rng_u, to obtain u3.

After arithmetic sharing processing, the MPC computation party A locally has u1 and u2, the MPC computation party B locally has u2 and u3, and the MPC computation party C locally has u3 and u1. However, only three data components need to be transmitted in the public network. In other words, six data components that originally need to be transmitted are reduced to three data components. However, when MPC computation parties perform arithmetic sharing, network transmission pressure is very small because arithmetic sharing is performed in a high-speed network.

In some other implementable manners, 1<M<N, and the data provider individually sends the M data components to the N MPC computation parties. In other words, some MPC computation parties each receive one data component by using a data message, and each MPC computation party receives a different data component. The other MPC computation parties receive zero data components. For example, an obtained data message carries no data component.

In this case, the carried data component is used as the first data component if a data message obtained by the MPC computation party carries a data component; or the first data component is empty if the obtained data message carries no data component.

In this case, after receiving the first data component, the MPC computation party performs zero-sharing processing, to obtain a third data component; combines the obtained third data component and the received first data component, to obtain a fourth data component; and performs arithmetic sharing processing by using the fourth data component as to-be-shared data, to obtain the second data component.

Zero-sharing processing means that each MPC computation party generates a data component, and the sum of data components generated by all MPC computation parties is 0. Specifically, zero-sharing processing includes: The MPC computation party generates a first derived value by using a locally held first zero-sharing key, and generates a second derived value by using a locally held second zero-sharing key; and obtains a third data component based on a difference between the first derived value and the second derived value. All the MPC computation parties pre-agree upon a zero-sharing key, so that each MPC computation party locally has a key pair (prng, prngu) including a first zero-sharing key and a second zero-sharing key. prng of the MPC computation party A is the same as prngu of the MPC computation party C, prng of the MPC computation party B is the same as prngu of the MPC computation party A, and prng of the MPC computation party C is the same as prngu of the MPC computation party B.

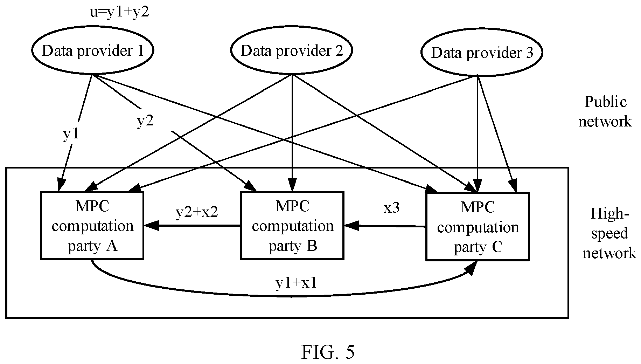

This implementation is described by using the three MPC computation parties shown in FIG. 1 as an example. As shown in FIG. 5, the data provider still splits the private data u into two data components y1 and y2; and then, transmits y1 to the MPC computation party A, and transmits y2 to the MPC computation party B. The MPC computation party C obtains zero data components.

The MPC computation party A, the MPC computation party B, and the MPC computation party C jointly perform one time of zero-sharing processing, to obtain three components x1, x2, and x3 of 0. Specifically, each MPC computation party generates a first derived value buf1 by using prng, generates a second derived value buf2 by using prngu, and uses a value of buf1-buf2 as the third data component obtained through zero-sharing processing.

The MPC computation party A combines results x1 and y1 of zero-sharing processing, to obtain a fourth data component x1+y1; the MPC computation party B combines results x2 and y2 of zero-sharing processing, to obtain a fourth data component x2+y2; and the MPC computation party C combines a result x3 of zero-sharing processing and the received zero data components, to obtain a fourth data component x3.

Then, the MPC computation party A, the MPC computation party B, and the MPC computation party C jointly perform one time of arithmetic sharing processing.

During arithmetic sharing processing, the MPC computation party A encrypts x1+y1 by using share_rng_d, and then transmits the encrypted x1+y1 to the MPC computation party C. The MPC computation party C decrypts the encrypted x1+y1 by using share_rng_u, to obtain x1+y1.

The MPC computation party B encrypts x2+y2 by using share_rng_d, and then transmits the encrypted x2+y2 to the MPC computation party A. The MPC computation party A decrypts the encrypted x2+y2 by using share_rng_u, to obtain x2+y2.

The MPC computation party C encrypts x3 by using share_rng_d, and then transmits the encrypted x3 to the MPC computation party B. The MPC computation party B decrypts the encrypted x3 by using share_rng_u, to obtain x3.

After arithmetic sharing processing, the MPC computation party A locally has u1=x1+y1 and u2=x2+y2, the MPC computation party B locally has u2=x2+y2 and u3=x3, and the MPC computation party C locally has u3=x3 and u1=x1+y1. However, only two data components need to be transmitted in the public network. In other words, six data components that originally need to be transmitted are reduced to two data components. However, when MPC computation parties perform arithmetic sharing, network transmission pressure is very small because arithmetic sharing is performed in a high-speed network.

In a model training or prediction scenario such as machine learning, private data provided by a data provider includes one-hot encoded data of sample feature data. Correspondingly, the first data component transmitted by the data provider is a logical component into which the one-hot encoded data are split, and an arithmetic component corresponding to the logical component is transmitted because of a requirement of some application scenarios. The logical component is a data component whose element is a binary value, and the arithmetic component is a data component whose element is an integral data value. For example, for a data set whose feature quantity is d, whose bin is b, and whose sample quantity is n, X[d][b][n] can be used to represent one-hot encoding of sample feature data, and a value of each element of X[d][b][n] is 0 or 1. Each element occupies 1 bit, and is split into logical components. A size of each logical component is the same as that of X[d][b][n]. In addition, the data provider needs to provide a data component corresponding to the logical component. In other words, each element of X[d][b][n] is represented by an integer, and occupies 32 bits. In such a manner, excessive transmission pressure is also clearly placed on the public network. That d=200, b=13, and n=100w is used as an example. It is difficult to accept that a size of six data components in full sending is approximately 60 GB. In the manner described in the above-mentioned embodiment, a quantity of data components can be reduced from 6 to 3 or 2, or a data amount transmitted between a data transmission party and the MPC computation party can be further reduced in the following embodiment.

In some embodiments, the first data component sent by the data provider is a logical component, and includes no arithmetic component. In other words, when the second data component is obtained, the second data component is also a logical component, and includes no arithmetic component.

In the some embodiments, the data provider sends only a logical component, and sends no arithmetic component, so that a data transmission amount of the public network can be greatly reduced. Correspondingly, when obtaining the second data component, the MPC computation party needs to convert the second data component from a logical component to an arithmetic component, to obtain the fifth data component.

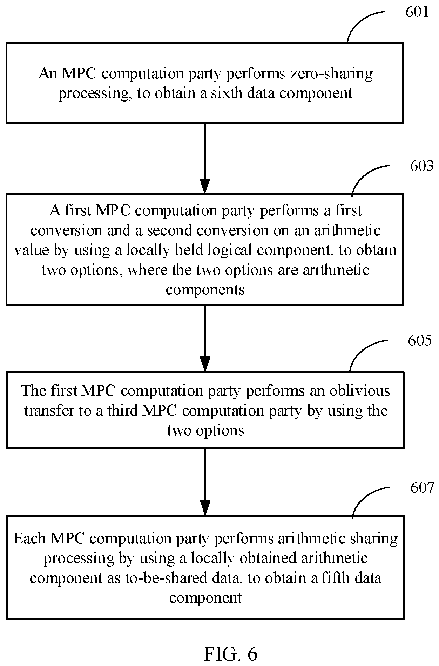

FIG. 6 is a flowchart illustrating a method for converting a logical component into an arithmetic component, according to some embodiments of this application. In such a procedure, a system includes a first MPC computation party, a second MPC computation party, and a third MPC computation party. As shown in FIG. 6, the method includes the following steps: Step 601: The MPC computation party performs zero-sharing processing, to obtain a sixth data component.

A zero-sharing processing manner is described in detail in the above-mentioned embodiment, and details are omitted here for simplicity. The sixth data component obtained through zero-sharing processing is an arithmetic component. Details are described by using an example in the following embodiments.

Step 603: The first MPC computation party performs a first conversion and a second conversion on an arithmetic value by using a locally held logical component, to obtain two options, where the two options are arithmetic components.

In some implementable manners, the first MPC computation party can generate a random value by using an interaction key; and perform the first conversion and the second conversion by using a first logical component and a second logical component that are locally held, the random value, and a quantity of decimal places of a used fixed-point number, to obtain the two options. In addition, the second MPC computation party can also generate the random value by using the interaction key.

In this step, two options m0 and m1 can be respectively obtained based on the following formulas:

$$m0=(0 \verb|^| u1 \verb|^| u2) \times (1 << B) - rnd;$$

and

$$m1=(1 \verb|^| u1 \verb|^| u2) \times (1 << B) - rnd$$

Here, ^ is an exclusive OR operator, << is a left-moving operator, and B is the quantity of decimal places of the fixed-point number used for the MPC processing. The fixed-point number is used in an MPC algorithm, and the fixed-point number is usually a fixed-point decimal. Most of numeric data processed by a computer are decimals, and a decimal point is usually implied at a fixed location. This is referred to as a fixed-point representation, and is briefly referred to as a fixed-point number, rnd is the random value, and can be generated by using a locally held interaction key share_rng_u.

Step 605: The first MPC computation party performs an oblivious transfer to the third MPC computation party by using the two options.

The oblivious transfer (OT) is a cryptographic protocol, and is currently widely applied to MPC. A purpose is that an MPC computation party sends m0 or m1 to another MPC computation party, and the another MPC computation party can obtain only one of m0 or m1. The MPC computation party that sends m0 or m1 cannot determine which one of m0 or m1 is obtained by the another MPC computation party.

In some implementable manners, the oblivious transfer in this step can be an oblivious transfer among three parties. The first MPC computation party serves as a sending party, the second MPC computation party serves as a helping party, and the third MPC computation party serves as a receiving party. The first MPC computation party performs one oblivious transfer by using m0 and m1 as two options and using, as an option, u3 locally held by the second MPC computation party and the third MPC computation party. Details are described by using an example in the following embodiments.

Step 607: Each MPC computation party performs arithmetic sharing processing by using a locally obtained arithmetic component as to-be-shared data, to obtain the fifth data component.

Specifically, during arithmetic sharing processing, each MPC computation party shares local to-be-shared data with a next MPC computation party after encrypting the local to-be-shared data, and receives and decrypts data shared by a previous MPC computation party. The decrypted data and the local to-be-shared data are combined, to obtain the fifth data component. Each MPC computation party performs the sharing processing in a cyclic order.

This implementation is described by using the three MPC computation parties shown in FIG. 1 as an example. It is assumed that the MPC computation party A, the MPC computation party B, and the MPC computation party C respectively obtain second data components (u1, u2), (u2, u3), and (u3, u1).

The MPC computation party A, the MPC computation party B, and the MPC computation party C jointly perform one time of zero-sharing processing, to respectively obtain respective fifth data components r1, r2, and r3. Here, r1, r2, and r3 are all arithmetic components.

The MPC computation party A generates a random value rnd by using the local share_rng_u, and determines

$$m0=(0\verb|^|u1\verb|^|u2)\times(1\verb|<<|B)-rnd;$$

and

$$m1=(1\verb|^|u1\verb|^|u2)\times(1\verb|<<|B)-rnd$$

Here, "1<<B" is arithmetic component conversion processing. In other words, (1^x.b^x.bu) is converted into an arithmetic value.

The MPC computation party B generates a random value rnd by using the local share_rng_d, and the value is the same as the random value generated by the MPC computation party A. In this case, the MPC computation party B locally holds r2'. Here, r2'=r2+rnd.

The MPC computation party A serves as a sending party of the oblivious transfer, the MPC computation party B serves as a helping party, and the MPC computation party C serves as a receiving party. The MPC computation party A performs one oblivious transfer by using m0 and m1 as two options and using, as an option, u3 locally held by the MPC computation party B and the MPC computation party C.

Specifically, the MPC computation party A and the MPC computation party B interact to generate common random values W0 and W1. The MPC computation party A sends m0^W0 and m1^W1 to the MPC computation party C. The MPC computation party B sends Wc to the MPC computation party C by using u3. Here, Wc is W0 or W1. The MPC computation party C decrypts each of m0^W0 and m1^W1 by using Wc, and decrypts one of m0^W0 or m1^W1, to obtain mi. Here, mi is a value in m0 or m1. After the oblivious transfer, the MPC computation party C locally holds r3'. Here, r3'=r3+mi.

The MPC computation party A uses r1 as to-be-shared data, the MPC computation party B uses r2' as to-be-shared data, and the MPC computation party C uses r3' as to-be-shared data, to perform one time of arithmetic sharing processing, so as to obtain respective arithmetic components. In other words, the MPC computation party A obtains an arithmetic component r1+r2', the MPC computation party B obtains an arithmetic component r2+r3', and the MPC computation party C obtains an arithmetic component r1+r3'.

The following demonstrates whether an arithmetic component is obtained in the above-mentioned process: Because a value of u3 is 0 or 1:

when u3 is 0:

$$r1+r2'+r3'=r1+r2+rnd+r3+(0\verb|^|u1\verb|^|u2)*(1\verb|<<|B)-rnd$$
$$=(0\verb|^|u1\verb|^|u2)*(1\verb|<<|B)=(u3\verb|^|u1\verb|^|u2)*(1\verb|<<|B);\ or$$

when u3 is 1:

$$r1+r2'+r3'=r1+r2+rnd+r3+(1\verb|^|u1\verb|^|u2)*(1\verb|<<|B)-rnd$$
$$=(1\verb|^|u1\verb|^|u2)*(1\verb|<<|B)=(u3\verb|^|u1\verb|^|u2)*(1\verb|<<|B).$$

Here, (1<<B) is actually processing of converting a logical value into an arithmetic value. To be specific, r1+r2'+r3' is equivalent to the sum of a logical amount, and (u3^ul^u2) is converted into an arithmetic value. One time of arithmetic sharing is performed on r1, r2', and r3', and the three MPC computation parties each have an arithmetic component.

In this example, the data provider only needs to send a logical component of a sample, but does not need to send an arithmetic component. Compared with a case in which the logical component and the arithmetic component both need to be transmitted, in this example, a data transmission amount is reduced to 1/33.

In some other embodiments, the first data component sent by the data provider can be an address-geocoded component of a logical component. The logical component is a data component whose element is a binary value. In other words, when sending the logical component, the data provider uses address geocoding to represent one-hot encoding, to compact a transmitted data amount. Address geocoding is using a binary integer to represent a location of 1 in one-hot encoding. That a three-dimensional array X[d][b][n] is used to represent sample feature data are still used as an example. If originally used b-bit one-hot encoding is changed to address geocoding for representation, the data amount can be compacted to $ceil(\log_2 b)$ bits. Ceil() is a round up function.

In b-bit one-hot encoding, only 1 bit is 1, and the other bits are 0. Address geocoding of $ceil(\log_2 b)$ bits is used to represent the location of 1. For example, for one-hot encoding "0000000001000", address geocoding "1010" can be used to represent that 1 is the 10th bit in one-hot encoding.

Therefore, for the MPC computation party, the obtained second data component is an address-geocoded representation of one-hot encoding, and needs to be converted from the address-geocoded component to a one-hot encoded component, to obtain a seventh data component, so as to perform MPC processing.

A conversion idea is that a value of each bit of the one-hot encoded component can be represented as a combination product of a value or a complement value of each bit of the address-geocoded component. Therefore, a combination product that is of a value or a complement value (namely, a value obtained through complementing) of each bit of an address-geocoded component and that corresponds to each bit of the one-hot encoded component can be used to obtain a value of each bit of the one-hot encoded component.

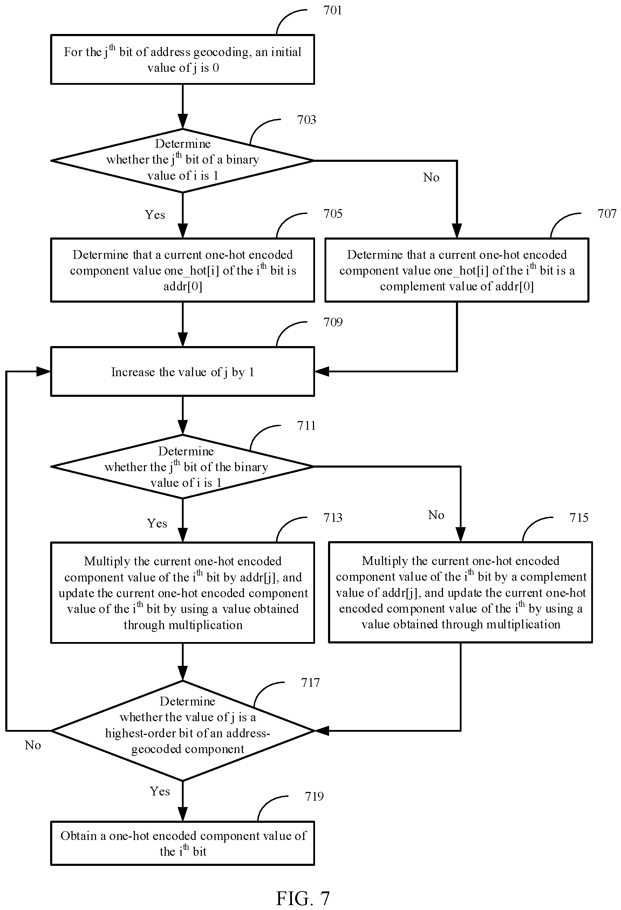

FIG. 7 is a flowchart illustrating a method for converting an address-geocoded component into one-hot encoded component, according to some embodiments of this application. As shown in FIG. 7, the following steps are used to determine a value of the ith bit of the one-hot encoded component. Here, i starts from 0, and sequentially becomes b-1.

Step 701: For the jth bit of address geocoding, an initial value of j is 0.

Step 703: Determine whether the jth bit of a binary value of i is 1, and perform step 705 if yes; otherwise, perform step 707.

Step 705: Determine that a current one-hot encoded component value one_hot[i] of the ith bit is addr[0], and perform step 709. That is,

```
one_hot[i]=addr[0].
```

Here, addr[0] is a value of the 0th bit of the address-geocoded component.

Step 707: Determine that a current one-hot encoded component value one_hot[i] of the ith bit is a complement value of addr[0], and perform step 709. That is,

```
one_hot[i]=addr[0].
```

Here, ~ indicates to complement logic of MPC processing.

Step 709: Increase the value of j by 1.

Step 711: Determine whether the jth bit of the binary value of i is 1, and perform step 713 if yes; otherwise, perform step 715.

Step 713: Multiply the current one-hot encoded component value of the ith bit by addr[j], and update the current one-hot encoded component value of the ith bit by using a value obtained through multiplication, to perform step 717. That is,

$$one\_hot[i]=one\_hot[i]\times addr[j]$$

Here, $\times$ is a multiplication operation in MPC processing.

Step 715: Multiply the current one-hot encoded component value of the ith bit by a complement value of addr[j], and update the current one-hot encoded component value of the ith bit by using a value obtained through multiplication, to perform step 717. That is,

$$one\_hot[i]=one\_hot[i]\times(\sim addr[j])$$

Step 717: Determine whether the value of j is a highest-order bit of the address-geocoded component, and perform step 719 if yes; otherwise, perform step 709.

Step 719: Obtain a one-hot encoded component value of the $i^{th}$ bit.

The above-mentioned procedure is executed for each of values of i from 0 to b-1, so that a one-hot encoded component value of each bit can be obtained, and finally, one-hot encoded component values of b bits are obtained.

Here, it should be noted that the first data component obtained by each MPC computation party actually includes a plurality of data components. In scenarios shown in FIG. 1, FIG. 3, and FIG. 5, the first data component obtained by each MPC computation party includes two data components. For example, a first data component obtained by the MPC computation party A is u1 and u2, a first data component obtained by the MPC computation party B is u2 and u3, and a first data component obtained by the MPC computation party C is u3 and u1. In other words, addj [0] and addr[j] each include a plurality of component values (there are two components in the scenarios shown in FIG. 1, FIG. 3, and FIG. 5). Correspondingly, one_hot[i] also includes a plurality of component values. That is, after the first data component is converted from address geocoding to one-hot encoding, the obtained second data component also includes a plurality of components, and the plurality of components are one-hot encoded components.

Based on the above-mentioned compaction algorithm, the data provider uses the address-geocoded component to replace the one-hot encoded component for transmission in the public network, to reduce a data transmission amount in the public network to $\frac{ceil(\log_2 b)}{b}$ of an original amount.

For example, a 16-bit one-hot encoded component is represented by using a 4-bit address-geocoded component. It is assumed that address geocoding received by the MPC computation party is addr[4]={a, b, c, d}, and upper-case letters A, B, C, and D respectively represent logical complement values of MPC processing of a, b, c, and d.

Based on a procedure shown in FIG. 7, values of bits of the one-hot encoded component can be obtained: one_hot[0]=ABCD

"ABCD" is a representation of "A×B×C×D" whose multiplication symbol is omitted. The following representations are all made in such a manner.

one_hot[1]=ABCd
one_hot[2]=ABcD
one_hot[3]=ABcd
one_hot[4]=AbCD
one_hot[5]=aBcD
one_hot[6]=AbcD
one_hot[7]=Abcd
one_hot[8]=aBCD
one_hot[9]=aBCd
one_hot[10]=aBcD

During the above-mentioned computation, multiplication can be optimized. Because interaction between MPC computation parties does not need to be performed for an addition operation in MPC processing, and interaction between MPC computation parties needs to be performed for a multiplication operation, multiplication can be converted into addition as much as possible, to reduce multiplication operations as much as possible. Specifically, when multiplication is performed, a product of some values of addr[j] in the address-geocoded component can be computed to obtain a computed product value, and multiplication of the other values of addr[j] is converted into processing of addition of a plurality of addition items. Here, the addition item includes the computed product value. Some addition items can be computed product values, or all addition items can be computed product values.

For example, ab, abc, Abc, aBc, abcd, Abed, aBcd, ABcd, abCd, AbCd, and aBCd are computed by using a multiplication operation, and other multiplication is converted into addition of the above-mentioned computed results:

$$Ab=ab+b$$

$$aB=ab+a$$

$$AB=Ab+A$$

$$ABc=abc+Abc+aBc+c$$

$$abC=abc+ab$$

$$AbC=Abc+Ab$$

$$aBC=aBc+aB$$

$$ABC=ABc+AB$$

$$ABCd=abcd+Abcd+aBcd+ABcd+abCd+AbCd+aBCd+d$$

$$abcD=abcd+abc$$

$$AbcD=Abcd+Abc$$

$$ABCD=ABCd+ABC$$

$$ABcD=ABcd+ABc$$

$$AbCD=AbCd+AbC$$

$$aBCD=aBCd+aBC$$

$$aBcD=aBcd+aBc$$

$$abCD=abCd+abC$$

Specific embodiments of this specification are described above. Other embodiments fall within the scope of the appended claims. In some cases, the actions or steps described in the claims can be performed in an order different from that in the embodiments, and the desired results can still be achieved. In addition, the process depicted in the accompanying drawings does not necessarily need a particular sequence or consecutive sequence to achieve the desired results. In some implementations, multi-tasking and parallel processing are feasible or may be advantageous.

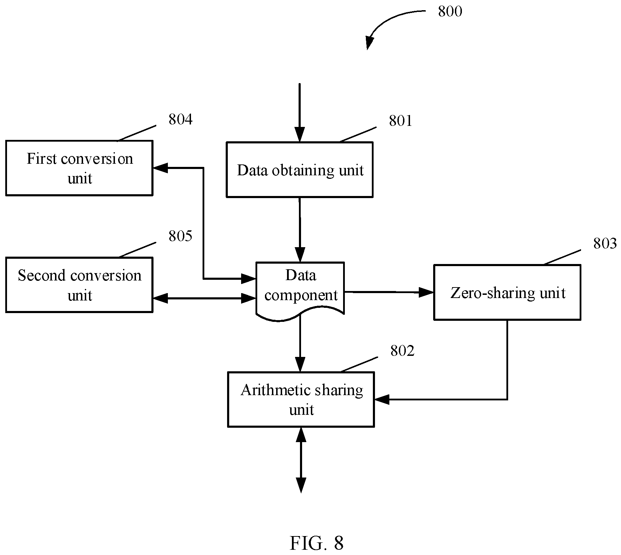

According to some embodiments of another aspect, a data processing apparatus is provided. FIG. 8 is a schematic block diagram illustrating a data processing apparatus, according to some embodiments. It can be understood that the apparatus can be disposed on an MPC computation party in the system shown in FIG. 1, and can be embodied in a form of an application or a functional unit such as a plug-in or a software development kit (SDK) in the application program. As shown in FIG. 8, the apparatus 800 includes a data obtaining unit 801 and an arithmetic sharing unit 802, and can further include a zero-sharing unit 803, a first conversion unit 804, and a second conversion unit 805. Main functions of all constitutional units are as follows: The data obtaining unit 801 is configured to: obtain a data message sent by a data provider, and obtain a first data component by using a data message.

The arithmetic sharing unit 802 is configured to perform arithmetic sharing processing by using the first data component, to obtain a second data component, so as to perform MPC processing.

N data messages received by N MPC computation parties include: a data message sent after the data provider splits private data into M data components, and M data messages each are used to carry one data component. Here, $1 < M \leq N$, and M is a positive integer.

In some implementable manners, M=N, each data message carries one data component, and the data obtaining unit 801 can use a data component carried in the obtained data message as the first data component. The arithmetic sharing unit 802 can be specifically configured to perform arithmetic sharing processing by using the first data component as to-be-shared data, so as to obtain the second data component.

In some other implementable manners, M is greater than 1 and less than N, the M data messages each carry one data component, and the remaining data messages carry zero data components. The data obtaining unit 801 can be specifically configured to use the carried data component as the first data component if the obtained data message carries a data component, where the first data component is empty if the obtained data message carries zero data components. Correspondingly, the zero-sharing unit 803 can first perform zero-sharing processing, to obtain a third data component. Then, the arithmetic sharing unit 802 combines the third data component obtained by the zero-sharing unit 803 and the first data component carried in the data message, to obtain a fourth data component; and performs arithmetic sharing processing by using the fourth data component as to-be-shared data, to obtain the second data component.

Specifically, the zero-sharing unit 803 can generate a first derived value by using a locally held first zero-sharing key, and generate a second derived value by using a locally held second zero-sharing key; and obtain the third data component based on a difference between the first derived value and the second derived value.

When performing arithmetic sharing processing, the arithmetic sharing unit 802 shares local to-be-shared data with a next MPC computation party after encrypting the local to-be-shared data, and receives and decrypts data shared by a previous MPC computation party; and combines the received decrypted data and the local to-be-shared data, to obtain the second data component. Each MPC computation party performs arithmetic sharing processing in a cyclic order.

In some implementable manners, the second data component is a logical component. The first conversion unit 804 is configured to convert the second data component from a logical component to an arithmetic component, to obtain a fifth data component, so as to perform MPC processing.

In some implementable manners, the N MPC computation parties in the system include a first MPC computation party, a second MPC computation party, and a third MPC computation party. The first conversion unit 804 can be specifically configured to perform zero-sharing processing, to obtain a sixth data component, where the sixth data component is an arithmetic component. If the apparatus is disposed on the first MPC computation party, the first conversion unit 804 performs a first conversion and a second conversion on an arithmetic value by using a locally held logical component, to obtain two options, where the two options are arithmetic components; and performs an oblivious transfer to the third MPC computation party by using the two options.

The first conversion unit 804 is further configured to perform arithmetic sharing processing by using a locally obtained arithmetic component as to-be-shared data, to obtain the fifth data component.

The locally held logical component includes a first logical component and a second logical component.

When performing the first conversion and the second conversion on the arithmetic value by using the locally held logical component, the first conversion unit 804 can generate a random value by using an interaction key; and perform the first conversion and the second conversion by using the first logical component and the second logical component that are locally held, the random value, and a quantity of decimal places of a fixed-point number used for MPC processing, to obtain the two options.

If the apparatus is disposed on the first MPC computation party, the first conversion unit 804 is further configured to generate the random value by using the interaction key.

If the apparatus is disposed on the third MPC computation party, the first conversion unit 804 is further configured to obtain an option obliviously transferred by the first MPC computation party.

The first conversion unit 804 can respectively obtain options m0 and m1 according to the following formulas:

$$m0 = (0 \wedge u1 \wedge u2) \times (1 << B) - rnd;$$

and

$$m1 = (1 \wedge u1 \wedge u2) \times (1 << B) - rnd$$

Here, $\wedge$ is an exclusive OR operator; $<<$ is a left-moving operator; u1 and u2 are respectively the first logical component and the second logical component; rnd is random value; and B is the quantity of decimal places of the used fixed-point number.

In some other implementable manners, the second data component is an address-geocoded component. The second conversion unit 805 is configured to convert the second data component from an address-geocoded component to a one-hot encoded component, to obtain a seventh data component, so as to perform MPC processing.

In some implementable manners, the second conversion unit 805 can be specifically configured to obtain a value of each bit of the one-hot encoded component based on a combination product that is of a value or a complement value of each bit of an address-geocoded component and that corresponds to each bit of the one-hot encoded component.

The second conversion unit 805 can be specifically configured to determine a value of the $i^{th}$ bit of the one-hot encoded component in the following manner: for the $j^{th}$ bit of address geocoding, where j is 0 at a start, if the $j^{th}$ bit of a binary value of i is 1, determining that a current one-hot encoded component value of the $i^{th}$ bit is addr[0]; otherwise, determining that a current one-hot encoded component value of the $i^{th}$ bit is a complement value of addr[0]; increasing a value of j by 1, and if the $j^{th}$ bit of the binary value of i is 1, multiplying the current one-hot encoded component value of the $i^{th}$ bit by addr[j], and updating the current one-hot encoded component value of the $i^{th}$ bit by using a value obtained through multiplication; otherwise, multiplying the current one-hot encoded component value of the $i^{th}$ bit by a complement value of addr[j], and updating the current one-hot encoded component value of the $i^{th}$ bit by using a value obtained through multiplication; and performing the step of increasing a value of j by 1, until j is a highest-order bit of the address-geocoded component, to obtain a one-hot encoded component value of the $i^{th}$ bit, where addr[0] is a value of the $0^{th}$ bit of the address-geocoded component, and addr[j] is a value of the $j^{th}$ bit of the address-geocoded component.

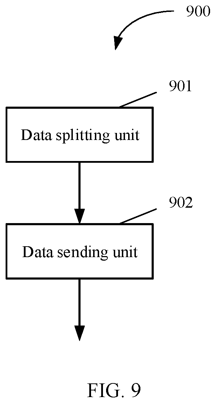

According to some embodiments of another aspect, a data processing apparatus is provided. FIG. 9 is a schematic block diagram illustrating a data processing apparatus, according to some embodiments. It can be understood that the apparatus can be disposed on a data provider in the system shown in FIG. 1, and can be embodied in a form of an application or a functional unit such as a plug-in or a software development kit (SDK) in the application program. As shown in FIG. 9, the apparatus 900 includes a data splitting unit 901 and a data sending unit 902. Main functions of all constitutional units are as follows: The data splitting unit 901 is configured to split private data into M data components, where $1 < M \leq N$, and M is a positive integer; and the data sending unit 902 is configured to individually send the M data components to the N MPC computation parties by using a data message, so that each MPC computation party receives one or zero data components, uses the one or zero data components as a first data component, and performs arithmetic sharing processing by using the first data component, to obtain a second data component, so as to perform MPC processing.

In some implementable manners, the data component is a logical component. That is, the data component can include only the logical component, and include no arithmetic component.

In some other implementable manners, the logical component is a one-hot encoded component.

In some preferred implementations, the logical component can be an address-geocoded component.

According to some embodiments of another aspect, a computer-readable storage medium is further provided. The computer-readable storage medium stores a computer program, and when the computer program is executed on a computer, the computer is enabled to perform the method described with reference to FIG. 2, FIG. 3, FIG. 6, or FIG. 7.

According to some embodiments of still another aspect, a computing device is further provided, including a memory and a processor. The memory stores executable code, and when the processor executes the executable code, the method described with reference to FIG. 2, FIG. 3, FIG. 6, or FIG. 7 is implemented.

With development of time and technology, a computer-readable storage medium has a broader meaning. A propagation path of a computer program is not limited to a tangible medium, can be directly downloaded from a network, etc. Any combination of one or more computer-readable storage media can be used. The computer-readable storage medium can be, by way of example rather than limitation, an electrical, magnetic, optical, electromagnetic, infrared, or semiconductor system, apparatus, or device, or any combination thereof. More specific examples (a non-exhaustive list) of the computer-readable storage medium include the following: an electrical connection with one or more leads, a portable computer disk, a hard disk, a random access memory (RAM), a read-only memory (ROM), an erasable programmable read-only memory (an EPROM or a flash memory), an optical fiber, a portable compact disk read-only memory (CD-ROM), an optical storage component, a magnetic storage device, or any suitable combination thereof. In this specification, the computer-readable storage medium can be any tangible medium that includes or stores a program, and the program can be used by or in combination with an instruction execution system, apparatus, or component.

The processor can include one or more single-core processors or a multi-core processor. The processor can include any combination of a general-purpose processor or a dedicated processor (for example, an image processor, an application processor, or a baseband processor).

Embodiments of this specification are all described in a progressive manner. For same or similar parts in the embodiments, mutual references can be made to the embodiments. Each embodiment focuses on a difference from other embodiments. In particular, the apparatus embodiment is basically similar to the method embodiment, and therefore is described briefly. For related parts, references can be made to related descriptions in the method embodiment.

A person skilled in the art should be aware that, in the above-mentioned one or more examples, functions described in this application can be implemented by hardware, software, firmware, or any combination thereof. When implemented by using software, these functions can be stored in a computer-readable medium or transmitted as one or more instructions or code on a computer-readable medium.

The specific implementations mentioned above provide further detailed explanations of the objectives, technical solutions, and beneficial effects of this application. It should be understood that the previously mentioned descriptions are merely specific implementations of this application and are not intended to limit the protection scope of this application. Any modifications, equivalent replacements, improvements, etc. made on the basis of the technical solutions of this application shall all fall within the protection scope of this application.

## Claims

1. A data processing method, applied to a system comprising a data provider and N secure multi-party computation MPC computation parties, wherein N is an integer greater than 3, and the method comprises:

   obtaining, by each MPC computation party, a data message sent by the data provider, and obtaining a first data component based on the data message; and

performing, by each MPC computation party, arithmetic sharing processing by using the first data component, to obtain a second data component, so as to perform MPC processing, wherein

N data messages received by the N MPC computation parties comprise: a data message sent after the data provider splits private data into M data components, and M data messages each are used to carry one data component, wherein M is greater than 1 and is less than or equal to N, and M is a positive integer.

2. The method according to claim 1, wherein

if M is equal to N, and each data message carries one data component, the obtaining a first data component based on the data message comprises: a data component carried in the obtained data message is used as the first data component; or

if M is greater than 1 and is less than N, the M data messages each carry one data component, and the remaining data messages carry zero data components, the obtaining a first data component based on the data message comprises: using the carried data component as the first data component if the obtained data message carries a data component, wherein the first data component is empty if the obtained data message carries zero data components.

3. The method according to claim 2, wherein the performing arithmetic sharing processing by using the first data component carried in the data message comprises:

if M=N, performing, by each MPC computation party, arithmetic sharing processing by using the first data component as to-be-shared data, to obtain the second data component; or

if M is greater than 1 and is less than N, performing, by each MPC computation party, zero-sharing processing, to obtain a third data component; combining the obtained third data component and the first data component carried in the data message, to obtain a fourth data component; and performing arithmetic sharing processing by using the fourth data component as to-be-shared data, to obtain the second data component.

4. The method according to claim 3, wherein the zero-sharing processing comprises:

generating, by each MPC computation party, a first derived value by using a locally held first zero-sharing key, and generating a second derived value by using a locally held second zero-sharing key; and

obtaining the third data component based on a difference between the first derived value and the second derived value.

5. The method according to claim 3, wherein the arithmetic sharing processing comprises:

sharing local to-be-shared data with a next MPC computation party after encrypting the local to-be-shared data, and receiving and decrypting data shared by a previous MPC computation party;

combining the received decrypted data and the local to-be-shared data, to obtain the second data component; and

performing, by each MPC computation party, arithmetic sharing processing in a cyclic order.

6. The method according to any one of claims 1 to 5, wherein the second data component is a logical component; and the method further comprises:

converting, by the MPC computation party, the second data component from a logical component to an arithmetic component, to obtain a fifth data component, so as to perform MPC processing.

7. The method according to claim 6, wherein the N MPC computation parties comprise a first MPC computation party, a second MPC computation party, and a third MPC computation party; and

the converting, by the MPC computation party, the second data component from a logical component to an arithmetic component comprises:

performing, by each MPC computation party, zero-sharing processing, to obtain a sixth data component, wherein the sixth data component is an arithmetic component;

performing, by the first MPC computation party, a first conversion and a second conversion on an arithmetic value by using a locally held logical component, to obtain two options, wherein the two options are arithmetic components;

performing, by the first MPC computation party, an oblivious transfer to the third MPC computation party by using the two options; and

performing, by each MPC computation party, arithmetic sharing processing by using a locally obtained arithmetic component as to-be-shared data, to obtain the fifth data component.

8. The method according to claim 7, wherein the locally held logical component comprises a first logical component and a second logical component;

the performing, by the first MPC computation party, a first conversion and a second conversion on an arithmetic value by using a locally held logical component comprises: generating, by the first MPC computation party, a random value by using an interaction key; and performing the first conversion and the second conversion by using the first logical component and the second logical component that are locally held, the random value, and a quantity of decimal places of a fixed-point number used for the MPC processing, to obtain the two options; and the method further comprises: generating, by the second MPC computation party, the random value by using the interaction key.

9. The method according to any one of claims 1 to 5, wherein the second data component is an address-geocoded component; and the method further comprises:
converting, by the MPC computation party, the second data component from the address-geocoded component to a one-hot encoded component, to obtain a seventh data component, so as to perform the MPC processing.

10. The method according to claim 9, wherein the converting, by the MPC computation party, the second data component from the address-geocoded component to a one-hot encoded component comprises:
determining a value of the $i^{th}$ bit of the one-hot encoded component in the following manner:

for the $j^{th}$ bit of address geocoding, wherein j starts from 0, if the $j^{th}$ bit of a binary value of i is 1, determining that a current one-hot encoded component value of the $i^{th}$ bit is addr[0]; otherwise, determining that a current one-hot encoded component value of the $i^{th}$ bit is a complement value of addr[0];
increasing a value of j by 1, and if the $j^{th}$ bit of the binary value of i is 1, multiplying the current one-hot encoded component value of the $i^{th}$ bit by addr[j], and updating the current one-hot encoded component value of the $i^{th}$ bit by using a value obtained through multiplication; otherwise, multiplying the current one-hot encoded component value of the $i^{th}$ bit by a complement value of addr[j], and updating the current one-hot encoded component value of the $i^{th}$ bit by using a value obtained through multiplication; and
performing the step of increasing a value of j by 1, until j is a highest-order bit of the address-geocoded component, to obtain a one-hot encoded component value of the $i^{th}$ bit, wherein
addr[0] is a value of the $0^{th}$ bit of the address-geocoded component, and addr[j] is a value of the $j^{th}$ bit of the address-geocoded component.

11. A data processing method, applied to a system comprising a data provider and N secure multi-party computation MPC computation parties, wherein N is an integer greater than 3, and the method comprises:

splitting, by the data provider, private data into M data components, wherein M is greater than 1 and less than or equal to N, and M is a positive integer; and
individually sending the M data components to the N MPC computation parties by using a data message, so that each MPC computation party receives one or zero data components, uses the one or zero data components as a first data component, and performs arithmetic sharing processing by using the first data component, to obtain a second data component, so as to perform MPC processing.

12. The method according to claim 11, wherein the data component is a logical component or an address-geocoded component.

13. A data processing apparatus, applied to a system comprising a data provider and N secure multi-party computation MPC computation parties, wherein N is an integer greater than 3, and the apparatus is disposed on the MPC computation party, and comprises:

a data obtaining unit, configured to: obtain a data message sent by the data provider, and obtain a first data component by using the data message; and
an arithmetic sharing unit, configured to perform arithmetic sharing processing by using the first data component, to obtain a second data component, so as to perform MPC processing, wherein
N data messages received by the N MPC computation parties comprise: a data message sent after the data provider splits private data into M data components, and M data messages each are used to carry one data component, wherein M is greater than 1 and is less than or equal to N, and M is a positive integer.

14. A data processing apparatus, applied to a system comprising a data provider and N secure multi-party computation MPC computation parties, wherein N is an integer greater than 3, and the apparatus is disposed on the data provider, and comprises:

a data splitting unit, configured to split private data into M data components, wherein M is greater than 1 and less than or equal to N, and M is a positive integer; and
a data sending unit, configured to individually send the M data components to the N MPC computation parties by using a data message, so that each MPC computation party receives one or zero data components, uses the one or zero data components as a first data component, and performs arithmetic sharing processing by using the first data component, to obtain a second data component, so as to perform MPC processing.

15. A computing device, comprising a memory and a processor, wherein the memory stores executable code, and when executing the executable code, the processor implements the method according to any one of claims 1 to 12.

u=u1+u2+u3

Data provider 1    Data provider 2    Data provider 3

u1 and
u3

u2 and
u3

u1 and u2

Public
network

MPC
computation
party A

MPC
computation
party B

MPC
computation
party C

High-
speed
network

FIG. 1

201

A data provider splits private data into M data
components

203

Individually send the M data components to N
MPC computation parties by using a data
message, so that each MPC computation party
receives one or zero of the data components,
and uses the one or zero data components as a
first data component

FIG. 2

An MPC computation party obtains a data message sent by a data provider, and obtains a first data component based on the data message — 301

Perform arithmetic sharing processing by using the first data component, to obtain a second data component, so as to perform MPC processing, where N data messages received by N MPC computation parties include: a data message sent after the data provider splits private data into M data components, and M data messages each are used to carry one data component — 303

FIG. 3

u=u1+u2+u3

Data provider 1    Data provider 2    Data provider 3

Public network

u3
u2
u1

MPC computation party A    u2    MPC computation party B    u3    MPC computation party C

High-speed network

u1

FIG. 4

FIG. 5

601

An MPC computation party performs zero-sharing processing, to obtain a sixth data component

603

A first MPC computation party performs a first conversion and a second conversion on an arithmetic value by using a locally held logical component, to obtain two options, where the two options are arithmetic components

605

The first MPC computation party performs an oblivious transfer to a third MPC computation party by using the two options

607

Each MPC computation party performs arithmetic sharing processing by using a locally obtained arithmetic component as to-be-shared data, to obtain a fifth data component

FIG. 6

701

For the $j^{th}$ bit of address geocoding, an initial
value of j is 0

703

Determine
whether the $j^{th}$ bit of a binary
value of i is 1

No

Yes

705

Determine that a current one-hot encoded
component value one_hot[i] of the $i^{th}$ bit is
addr[0]

707

Determine that a current one-hot encoded
component value one_hot[i] of the $i^{th}$ bit is a
complement value of addr[0]

709

Increase the value of j by 1

711

Determine
whether the $j^{th}$ bit of the binary
value of i is 1

Yes

No

713

Multiply the current one-hot encoded
component value of the $i^{th}$ bit by addr[j], and
update the current one-hot encoded component
value of the $i^{th}$ bit by using a value obtained
through multiplication

715

Multiply the current one-hot encoded
component value of the $i^{th}$ bit by a complement
value of addr[j], and update the current one-hot
encoded component value of the $i^{th}$ by using a
value obtained through multiplication

717

Determine
whether the value of j is a
highest-order bit of an address-
geocoded component

No

Yes

719

Obtain a one-hot encoded component value of
the $i^{th}$ bit

FIG. 7

800

804

First conversion
unit

801

Data obtaining unit

805

Second conversion
unit

Data
component

803

Zero-sharing unit

802

Arithmetic sharing
unit

FIG. 8

900

901

Data splitting unit

902

Data sending unit

FIG. 9

<div align="center">

**INTERNATIONAL SEARCH REPORT**

</div>

| International application No. |
| --- |
| **PCT/CN2023/071520** |

**A. CLASSIFICATION OF SUBJECT MATTER**

H04L9/08(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; ENTXTC; ENTXT; WPABS; 3GPP; CNKI; 百度, BAIDU: 多方安全计算, 可信执行环境, 算数共享, 零共享, 拆分, 分量, 分享, 加密, MPC, TEE, arithmetic sharing, zero sharing, split, component, share, encrypt

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114726512 A (ALIPAY (HANGZHOU) INFORMATION TECHNOLOGY CO., LTD.) 08 July 2022 (2022-07-08) description, paragraphs 2-224 | 1-15 |
| X | CN 112751665 A (ALIBABA GROUP HOLDING LIMITED) 04 May 2021 (2021-05-04) description, paragraphs 47-101 | 1-3, 5-6, 9, 11-15 |
| A | CN 112765616 A (BAIDU ONLINE NETWORK TECHNOLOGY (BEIJING) CO., LTD.) 07 May 2021 (2021-05-07) entire document | 1-15 |
| A | CN 112926051 A (ALIPAY (HANGZHOU) INFORMATION TECHNOLOGY CO., LTD.) 08 June 2021 (2021-06-08) entire document | 1-15 |
| A | CN 113987554 A (ALIPAY (HANGZHOU) INFORMATION TECHNOLOGY CO., LTD.) 28 January 2022 (2022-01-28) entire document | 1-15 |
| A | US 2020396063 A1 (KONINKLIJKE PHILIPS N.V.) 17 December 2020 (2020-12-17) entire document | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **26 April 2023** | **12 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/071520**

| Patent document cited in search report | | | Publication date (day/month/year) | Patent family member(s) | | | Publication date (day/month/year) |
|---|---|---|---|---|---|---|---|
| CN | 114726512 | A | 08 July 2022 | None | | | |
| CN | 112751665 | A | 04 May 2021 | CN | 112751665 | B | 09 December 2022 |
| | | | | WO | 2021083179 | A1 | 06 May 2021 |
| CN | 112765616 | A | 07 May 2021 | WO | 2022126993 | A1 | 23 June 2022 |
| CN | 112926051 | A | 08 June 2021 | CN | 112926051 | B | 06 May 2022 |
| | | | | WO | 2022199290 | A1 | 29 September 2022 |
| CN | 113987554 | A | 28 January 2022 | CN | 113987554 | B | 08 April 2022 |
| US | 2020396063 | A1 | 17 December 2020 | WO | 2019170908 | A1 | 12 September 2019 |

Form PCT/ISA/210 (patent family annex) (July 2022)